Europäisches Patentamt

European Patent Office

Office européen des brevets

(11) Publication number: **0 114 075**
**B1**

(12) # EUROPEAN PATENT SPECIFICATION

(45) Date of publication of patent specification: **20.04.88**

(21) Application number: **84100399.9**

(22) Date of filing: **16.01.84**

(51) Int. Cl.⁴: **G 01 G 13/16,** G 01 G 23/02, G 01 G 23/10, G 01 G 13/18, G 01 G 19/32, B 65 B 1/32

(54) **Method of detecting weight and weight detector structure.**

(30) Priority: **17.01.83 JP 4127/83**

(43) Date of publication of application:
**25.07.84 Bulletin 84/30**

(45) Publication of the grant of the patent:
**20.04.88 Bulletin 88/16**

(84) Designated Contracting States:
**DE FR GB IT**

(56) References cited:
**DE-A-2 732 052**
**GB-A-2 001 760**
**GB-A-2 077 067**

(73) Proprietor: **KABUSHIKI KAISHA ISHIDA KOKI SEISAKUSHO**
**44, Sanno-cho, Shogoin Sakyo-ku**
**Kyoto-shi Kyoto-fu (JP)**

(72) Inventor: **Kitagawa, Kazumi**
**423-3, Ogaki Ritto-cho**
**Kurita-gun Shiga-ken (JP)**

(74) Representative: **Grams, Klaus Dieter, Dipl.-Ing. et al**
**Patentanwaltsbüro Tiedtke-Bühling-Kinne-Grupe-Pellmann-Grams-Struif Bavariaring 4**
**D-8000 München 2 (DE)**

Courier Press, Leamington Spa, England.

## Description

### Background of the invention
#### 1. Field of the invention

This invention relates to structure of an apparatus for automatically weighing various objects to be weighed.

#### 2. Description of the prior art

As is well known, the measurement of weight is an extremely important operation in the distribution and other fields. The weight measurement, however, has various problems in effecting an accurate measurement on a flow line owing to the relation to packaging and the like.

More specifically, the process of packaging a good with a set weight is almost all automated these days, and a weight measuring apparatus is interposed in an intermediate part of the feed line so as to match with the packaging process.

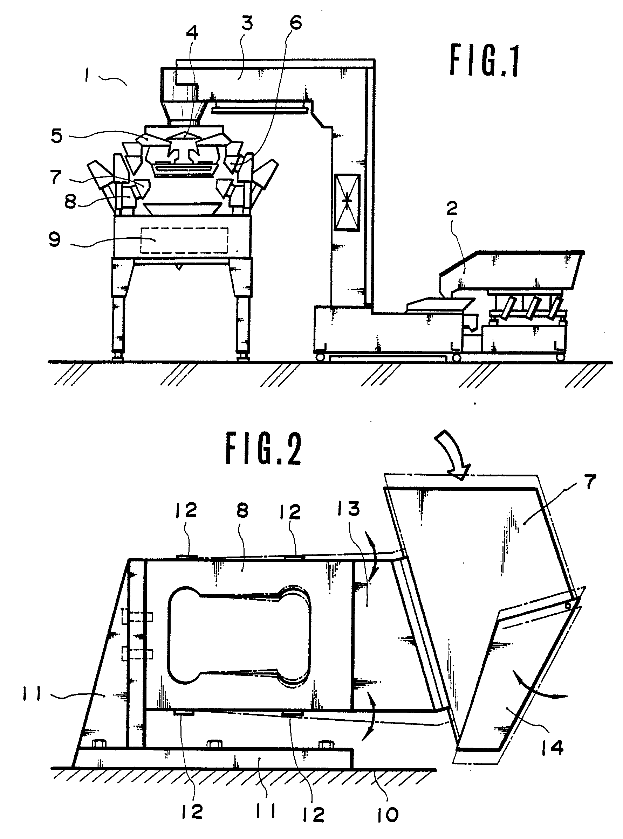

For example, in a weight measuring apparatus 1 shown in Fig. 1, an object to be weighed which is cast in stock trough 2 is discharged from a bucket conveyor 3 through a conical distributor 4 into radial troughs 5, 5 ... disposed around the distributor and is further discharged therefrom into pool hoppers 6, 6 ... equal in number to the radial troughs and is then cast into weighing hoppers 7, 7 ... provided under the corresponding pool hoppers 6. The weight of each weighing hopper is detected by means of a weight detector incorating therein a load cell 8, as a strain sensor, mounted in a cantilever manner and attached to the apparatus frame. The detection signals from the weight detectors are fed into a weight measuring apparatus computer 9, which operates to make a comparison between a set weight and a value obtained by adding values of each combination of the detection signals to determine a combination of the weighing hoppers 7, 7 ... providing a minimum value over the set weight. Then, the lids of the determined combination of the weighing hoppers 7, 7 ... are opened to transfer the object to a packaging unit.

Since the above-described weighing process is adapted to match with the packaging process, the weighing operation is effected in a continuous flow manner at a set timing.

For the above-mentioned detection of the weight of the weighing hopper 7, as shown in Fig. 2 (the weighing hopper 7 is reduced in size in Fig. 2 for reasons of illustration), an aluminum-base alloy load cell 8 equipped with strain gauges 12 as strain sensor is secured, in a cantilever manner, to a mounting bracket 11 secured to a frame 10 of the weight measuring apparatus 1, and the weighing hopper 7 is received by a hub slider 13 attached to the load cell so as to be slidably detachable for reasons of maintenance.

Therefore, the arrangement is as follows. A lid 14 of the weighing hopper 7 is opened by a driving unit, not shown, constituted by a rotary mechanism, a solenoid clutch and a cam mechanism to discharge the object having been weighed to the lower side. Before the discharge is completely finished, the lid of the upper corresponding pool hopper 6 is opened by means of a timer operation to cast the object to be weighed subsequently, and the lid of the weighing hopper 7 is closed at such a timing that the object to be weighed subsequently is not discharged from the outlet of the weighing hopper 7, thereby to contrive a minimum cycle timing flow.

As described above, since the load cell 8 is supported in a cantilever manner in order to make a detection, vibrations due to the natural frequency of the load cell 8 may be disadvantageously generated by external disturbances resulting from the shocks applied when the object is discharged from the weighing hopper 7 and cast therein.

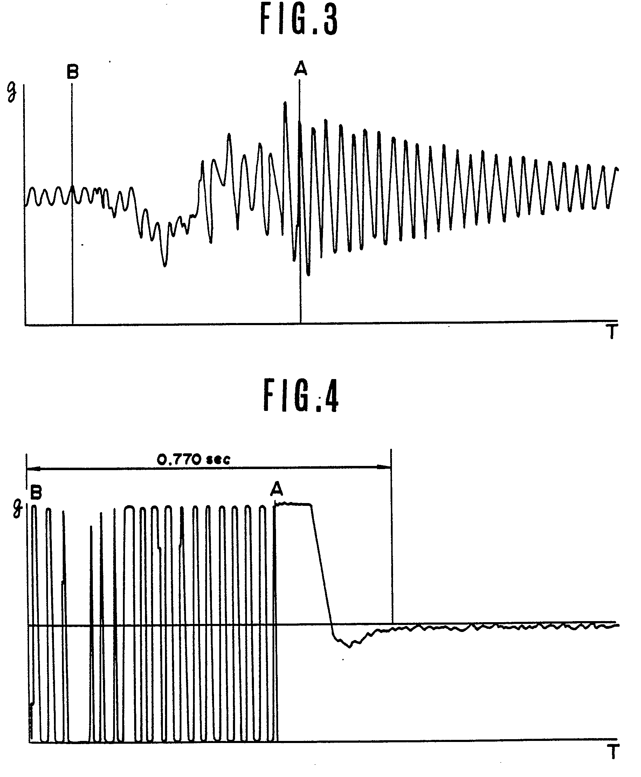

In addition, as shown in Fig. 3 in which time T is plotted along the axis of abscissas and the detected weight amount (g) along the axis of ordinates, the vibration being generated at the time A when casting is completed requires much time to attenuate to make it impossible to readily stabilize the load cell 8, inconveniently.

Even if these internal and external disturbance conditions of the weighing system are removed by a filter circuit, as will be clear from Fig. 4, it takes 0.770 second from the time B when the opening of the weighing hopper is started until the time when the load cell is stabilized, for example.

Accordingly, the accumulation of the stabilizing time required for the load cell 8 in a large number of operations for casting the object into the weighing hopper 7 remarkably impairs the weighing operation efficiency, disadvantageously. Therefore, there has been a problem that although the casting of the object into the pool hoppers and the transfer of the object to the packaging unit at the stage subsequent to the weighing hoppers are speedily carried out, the casting of the object into the weighing hoppers and the discharge of the object therefrom impair these speedy operations, resulting in a reduction in operating efficiency of the unit plant.

Moreover, since it is required that there should be variations in weight of the object cast into the weighing hoppers on the grounds of accuracy of combination weight measuring operation, differences are produced in striking energy generated when the object is cast and dropped into the weighing hoppers. In consequence, the weighing hoppers are different from each other in stabilizing time of the corresponding load cells, i.e., the stabilizing time differs every weighing operation, so that a large allowance must be set therefor. In reality, a design stabilizing time some times as much as an actual stabilizing time is set to effect weighing operation, disadvantageously.

### Summary of the invention

The present invention has been accomplished to solve the above-described technical problems of the prior art, such as the vibrations applied to the strain sensor when the object to be weighed is discharged from and cast into the weighing hopper of the weight detector and the reduction in weighing efficiency due to the attenuation which takes much time. Accordingly, an object of the invention is to provide an excellent method of detecting weight and a weight detector directly employed in the method useful for the field utilizing weighing in the distribution industry, by preventing the strain sensor from being affected by the discharge of the object from the weighing hopper and the casting of the object thereinto, thereby to permit a speedy and accurate weighing operation.

Brief description of the drawings

Fig. 1 is a side view of a schematic illustration of a weight measuring apparatus;

Fig. 2 is a side elevational view of a strain sensor in accordance with the conventional form;

Figs. 3 and 4 are graphs for explanation of the vibration and its attenuation of the conventional strain sensor;

Fig. 5 is a fragmentary longitudinal sectional view of a weight measuring apparatus in accordance with one embodiment of the present invention;

Fig. 6 is a partly-sectioned side elevational view of the strain sensor of the weight measuring apparatus shown in Fig. 5;

Fig. 7 is a partly-sectioned front elevational view of the strain sensor;

Fig. 8 is a partly cutaway perspective view of a braking device;

Fig. 9 is a time table for detection of weight; and

Figs. 10 and 11 are graphs for explanation of the vibration and its attenuation of the strain sensor in accordance with the present invention which is restrained from vibrating.

Detailed description of the embodiment

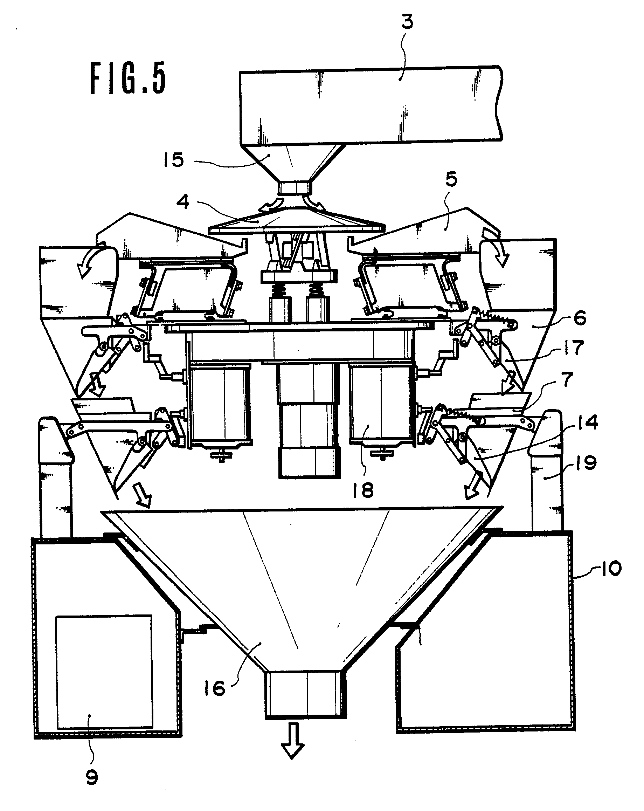

One embodiment of the present invention will be described hereinunder with reference to the drawings infra Fig. 5. It is to be noted that the same parts in the drawings as those in Figs. 1 to 4 will be described with the same reference numerals.

The embodiment shown in Fig. 5 is arranged to weigh an object to be weighed at the stage previous to the process of packaging the object, similarly to the apparatus shown in Fig. 1, and a weight measuring apparatus 1 is a combination weight measuring apparatus according to the various prior applications made by the applicant.

Thus, a bucket conveyor 3 is, similarly to that shown in Fig. 1, connected to a stock trough 2 as well as has its end faced to a feed chute 15.

A frame 10 provided between the feed chute 15 and a concentrating chute 16 defines a housing and has various mechanism units, described hereinafter, mounted thereon. The frame 10 guarantees the rigidity of the weight measuring apparatus 1.

In the housing part of the frame 10, a conical distributor 4 is concentrically mounted under the feed chute 15. Moreover, radial troughs 5, 5 ... are provided around the distributor 4 at equal spacings, and a corresponding pool hopper 6 is disposed at the end of each radial trough 5.

Each pool hopper 6 is provided with a lid 17 which can be opened and closed. Under the lid 17, a weighing hopper 7 is provided which has a lid 14 faced to the concentrating chute 16.

The lids 17, 14 are adapted to be opened and closed correspondingly to the respective hoppers at predetermined timings by the control effected by a computer 9 or the like through driving units 18, 18 each incorporating therein a solenoid clutch and a cam mechanism associated with a constant-rotating driving shaft as well as a photoelectric mechanism and so forth.

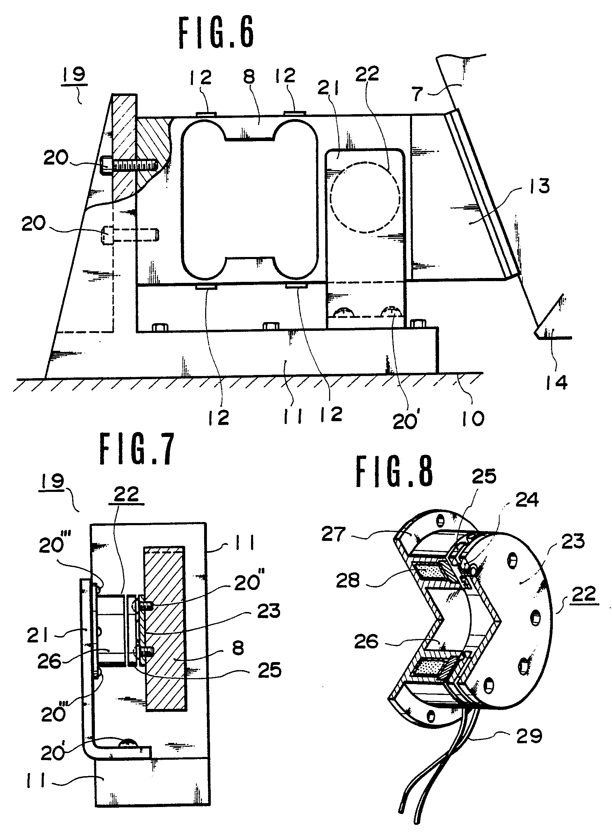

On the other hand, weight detectors 19 of the present invention are provided along the circumference of the frame 10 so as to correspond to the weighing hoppers 7, 7 ..., respectively. As shown in Fig. 6, a load cell 8, as a strain sensor, equipped with strain gauges 12 is secured, in a cantilever manner, to a mounting bracket 11 secured to the frame 10, through bolts 20, 20 .... The weighing hopper 7 is detachably set on a hub slider 13 integrally provided on the open end of the load cell 8.

The mounting bracket 11 has an L-shaped sub-bracket 21 with its base portion secured thereto through bolts 20' as shown in Figs. 6 and 7. A solenoid brake 22 as a braking device is interposed between the sub-bracket 21 and the portion of the load cell 8 closer to the hub slider 13.

The solenoid brake is basically a known one. An armature hub plate 23 is attached to the side of the load of the load cell 8 through bolts 20", 20" ... . An armature plate 25 is provided on the armature hub plate 23 through a constant-load leaf spring 24 so as to be able to approach and withdraw from the load cell 8 as well as vibrate vertically as one unit therewith.

On the other hand, the solenoid brake 22 has a stator 26 secured to the sub-bracket 21 through bolts 20''', 20''' ... . A coil 28 on the stator core is connected to a controller (not shown) and the computer 9 through lead wires 29.

It is to be noted that the end of the concentrating chute 16 is connected to a packaging unit, not shown.

(Embodiment—Operation)

In the process of effecting a bulk packaging of a predetermined weight of an object to be weighed by means of the above-described weight measuring apparatus 1, to effect a continuous packaging by a fixed amount, for example, by a set weight of 30 g, the following process is followed:

The object taken over from the stock trough 2 is cast into the feed chute 15 of the weight measuring apparatus 1 by means of the bucket conveyor 3 and fed from the conical distributor 4 to the pool hoppers 6, 6 ... through the corresponding radial troughs 5, 5 ... .

Therefore, the description will be set forth hereinunder from the object flow side. The object intermittently cast from the pool hoppers 6, 6 ... into the lower weighing hoppers 7, 7 ... through the associated lids 17 is subjected to detection of weight by means of the load cells 8 of the weight detectors 19, 19 ... for each of the weighing hoppers 6, 6 .... The detection signals are fed into the computer 9, which operates to compare each of combinations of the detection signals with the set weight value to determine and select a combination having a minimum weight which is not smaller than the set weight value, i.e., a minimum weight over 30 g. Then, the lids 14, 14 ... of the selected combination of weighing hoppers 7, 7 ... are opened by means of the associated driving units 18, 18 ... through the controller to transfer the object from the weighing hoppers 7, 7 ... to the packaging unit through the concentrating chute 16.

In correspondence to the opened weighing hoppers 7, 7 ... , the lids 17, 17 ... of the upper pool hoppers 6, 6 ... are opened by means of the above-mentioned driving units 18, 18 ... to effect the weight detection by means of the load cells 8 of the weight detectors 19 again. Then, by following a similar process, an automatic weighing operation is conducted in the flow of the object.

Thus, the present invention can cope with the conventional problems that in the above weighing process, vibrations are generated when the object is discharged from the weighing hoppers 7 and when the object to be weighted subsequently is cast therein, to cause vibrations of the load cells 8 due to the natural frequency thereof, and that much time is required until the vibrations attenuate to allow the load cells 8 to be stable. More specifically, the weights of the distributed portions of the object in the weighing hoppers 7 are detected by means of the corresponding load cells 8 and are subjected to operations for comparison to determine and select a proper combination of the weighing hoppers 7. In response to a combination calculation end signal, the controller actuates the driving units 18, 18 corresponding to the selected combination of the weighing hoppers 7, 7 to open the lids 14 of the weighing hoppers 7, 7. In this case, at the same time when discharge signals are delivered to the controller, as shown in the construction of the braking device 22 in Figs. 7 and 8, an exciting current is supplied to the coil 28 of the solenoid brake 22 to energize the coil 28 of the stator 26 to attract the armature plate 25 against the constant-load leaf spring 24, so that the load cell 8 is rigidly fixed to the frame 11 through the solenoid brake 22 and the sub-bracket 21 so as to be restrained from vibrating.

It is to be noted that the armature plate 25 is allowed to approach and withdraw from the load cell 8 through excitation and non-excitation by means of the constant-load leaf spring 24.

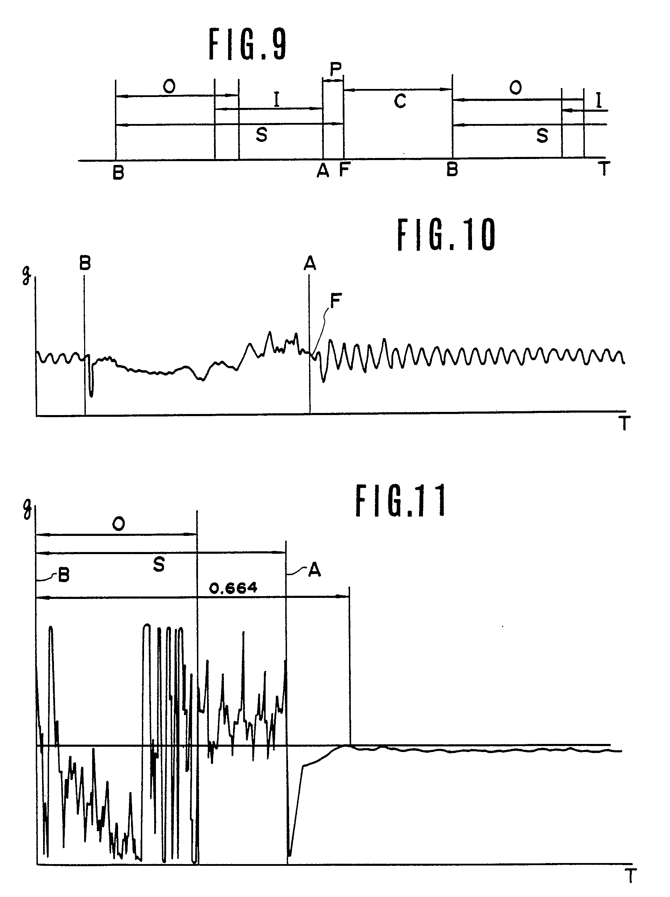

Therefore, during the operation of the driving unit 18, i.e., during the period O (Fig. 9) when the lid 14 of the weighing hopper 7 is opened and closed, the fixing and restraint S of the load cell by means of the solenoid brake 22 is maintained.

The driving of the pool hopper 6 is similar to that of the weighing hopper 7. More specifically, the driving shaft constantly rotates in the mutual driving unit 18, and the solenoid clutch for the pool hopper 6 is engaged in retard of the solenoid clutch for the weighing hopper by a set time to open the lid 17 of the pool hopper 6 through the cam mechanism in a similar manner in order to start discharge of the object in the pool hopper 6 into the weighing hopper 7 before the last portion of the object in the weighing hopper 7 has been discharged therefrom. On the other hand, the lid 14 of the weighing hopper 7 is closed by means of the cam mechanism in the driving unit when the last portion of the object having been weighed in the weighing hopper has been discharged and just before the leading portion of the object discharged from the pool hopper 6 reaches the outlet of the weighing hopper 7. Thus, the phase difference between the opening/closing cams and solenoid clutches for the lids 14, 17 of the weighing hopper 7 and the pool hopper 6, respectively, is designed to effect the above-mentioned operations. In addition, as shown in Fig. 9, the periods when the lids 14, 17 of the weighing hopper 7 and the pool hopper 6 are open, respectively, i.e., the period O (discharge) and the period I (casting) overlap with each other. During the overlapped period, the excitation of the coil 28 of the solenoid brake 22 is maintained to energize the same so that the vibration restraint S of the load cell 8 is continued.

A set time P is previously determined which corresponds to the stabilizing time required from the time A of completion of the casting of the object from the pool hopper 6 into the weighing hopper 7 until the time when the load cell 8 becomes stable. Therefore, the set time on the timer started at the time B when the combination calculation end signal is delivered is determined so as to include the periods O and I (overlapping with each other) and the set time P. By so doing, when the set time P has elapsed after the completion of the casting, the controller shuts off the exciting current to the coil 28 of the solenoid brake 22 to permit the armature plate 25 to be returned to the load cell 8 side by means of the constant-load leaf spring 24, thereby allowing the load cell 8 to be released from the restraint S to be free F.

However, the load cell 8 no longer vibrates since it has undergone the stable state P. Under this state, the process proceeds to the period C for detection of sensing signals from the strain gauges 12 of the load cell 8, calculation, combination and determination. At the point of time B when the period C ends, the combination calculation end signal is delivered.

The vibration of the load cell restrained and released during this period is as shown by experimental data in Fig. 10. As compared with the vibration thereof shown in Fig. 3 generated when the load cell is not restrained, despite the same ratio, the vibration generated from the point of time A when the casting of the object into the weighing hopper 7 is completed is constituted only by the static loading of the load and therefore can be practically neglected. In addition, through the comparison between the data in Fig. 11 obtained by filtering out external disturbances from instrumentation data and the conventional data shown in Fig. 4, it is understood that despite the same ratio, the apparatus of the present invention requires 0.664 second until the load cell becomes stable although the conventional apparatus requires 0.770 second, i.e., the stabilizing time can be reduced by more than about 0.1 second.

Accordingly, the detection of the weight of the object in the weighing hopper 7 by means of the load cell 8 is accurately effected within a minimum time and in a stable condition, so that the weighing time for one flow is remarkably reduced in total.

It is to be noted that the restraint of the load cells is laid on the whole load cells for the same time during the set time on the timer regardless of the selection of the combination.

Moreover, in the case where although the combination calculation end signal is delivered a proper combination cannot be found, the discharge step is not carried out. In such a case, in order to change the weight variations in the distributed portions of the object in the weighing hoppers, the object is additionally supplied to only given weighing hoppers, and then the combination calculation is executed again.

In this case, even if the discharge step is not carried out, the whole load cells are to be similarly restrained through the controller.

(Another embodiment)

It is to be noted that, as a matter of course, the above-described embodiment is not exclusive and the invention may be carried out in a variety of forms. For example, such a form is included in the invention that the braking device is constituted by a mechanical braking device, e.g., an upper-lower surface cam clamp device in place of the solenoid brake. Also the weight measuring apparatus can be applied other apparatus than the combination weight measuring apparatus, e.g., an automatic weight measuring apparatus by means of a single weight detector.

(Effect of the invention)

As has been described, according to the invention, in detecting the weight of the object cast into the weighing hopper, it is basically possible to restrain the detector from vibrations thereby to eliminate the necessity to wait for the attenuation of the vibration of the detector generated when the object is cast into the weighing hopper and when the object is discharged therefrom. Therefore, it is possible to greatly reduce the time required from the time when the casting is completed until the time when the detector becomes stable. Accordingly, the detecting and weighing operations can be speedily effected, so that such an excellent effect is offered that the total weighing operation efficiency on the flow line is remarkably improved.

Moreover, since the detection or measurement is effected in a reduced measuring time as well as in a stable condition which is physically guaranteed, the reliability of the measurement data is increased advantageously. In addition, since the stabilizing time can be made constant for each weighing operation, the degree of stableness is constant for each weighing operation; hence, the measurement data are improved in accuracy throughout the weighing operations.

Further, the frequency to be removed in the filter circuit is limited; therefore, such an excellent effect is offered that the designing of the circuit is facilitated.

Furthermore, since the strain sensor is fixed to the frame so as to be restrained from vibrating from the time when the object is discharged from the weighing hopper until the time when a predetermined time has elapsed after the completion of the subsequent casting of the object, the time range where the process of weighing the object may be affected by the vibration is all covered. In addition, the above-mentioned attenuation time can be eliminated or reduced, advantageously.

Thus, the apparatus directly employed in the method wherein weight is detected as described above has the braking device provided on the side of the strain sensor closer to the weighing hopper. Therefore, the sensor per se, i.e., the vibration oscillator per se can be restrained; hence, the above-mentioned measurement can be reduced in time, conveniently.

In addition, since it is only necessary to provide the braking device for the strain sensor, the conventional apparatus is only required to additionally have the braking device and the controller. Accordingly, it is favorably unnecessary to effect any special change in design.

Further, the braking device is connected to the controller through the computer by means of the calculation end of weighing completion signal. For this reason, it is advantageously possible to effect, full automatically, the setting of time, the reliable fixing of the strain sensor for restraint and the release of the sensor from the restraint.

Furthermore, since the weighing hopper and the strain sensor are restrained from vibrating at casting and discharge, the working part of the weight measuring apparatus as a precision apparatus is improved in durability, favorably.

**Claims**

1. A method of detecting weight wherein during the period when an object to be weighed is cast into a weighing hopper (7) of a weight measuring apparatus (1) and the weight of the weighing hopper (7) is detected by means of a weight detector (19) comprising a strain sensor (8) and then the object is discharged to a subsequent stage (16), at least while the object is being cast into the weighing hopper (7), the vibration and attenuating vibration of the strain sensor (8) are restrained, characterized in that said sensor (8) is fixed to a frame (10) for restraint during a set time

## 9 — 0 114 075 — 10

from the time when the start of the discharge of said object from said weighing hopper (7) is detected until the time when the detection of weight is started.

2. A method of detecting weight according to claim 1, wherein said set time further includes a complementary set time after the completion of the casting of the object to be weighed subsequently into said weighing hopper (7).

3. A method of detecting weight according to either one of claims 1 and 2, wherein said set time is determined through a timer.

4. A method of detecting weight according to any of claims 1, 2 and 3, wherein a plurality of weight detectors (19) are simultaneously restrained according to said set time.

5. A weight detector structure wherein a weight detector (19) comprises a strain sensor (8) connected to a measuring instrument and has one end thereof secured to a frame (10) of a weight measuring apparatus (1) and is provided with a weighing hopper (7) at the other end, characterized in that a braking device (22) is installed between said frame (10) and the side of said strain sensor (8) on which said weighing hopper (7) is installed, and that said braking device (22) is actuated by a predetermined signal through a controller.

6. A weight detector structure according to claim 5, wherein said strain sensor is constituted by a load cell (8).

7. A weight detector structure according to either one of claims 5 and 6, wherein said braking device is constituted by a solenoid brake (22).

**Patentansprüche**

1. Verfahren zum Bestimmen eines Gewichts, wobei während der Zeitspanne, in der ein zu wiegendes Objekt in einen Wiegetrichter (7) einer Gewichtsbestimmungsvorrichtung (1) geworfen und das Gewicht des Wiegetrichters (7) mittels eines Gewichtsdetektors (19), der einen Spannungssensor (8) umfaßt, festgestellt, sowie das Objekt dann zu einer darauffolgenden Stufe weggeführt wird, zumindest während das Objekt in den Wiegetrichter (7) geworfen wird, die Schwingung und die dämpfende Schwingung des Spannungssensors (8) beschränkt wird, dadurch gekennzeichnet, daß während einer festgesetzten Zeitspanne von dem Zeitpunkt, bei dem der Beginn der Wegführung des Objekts von dem Wiegetrichter (7) festgestellt wird, bis zu dem Zeitpunkt, bei dem die Gewichtsbestimmung beginnt, der Sensor (8) zur Festsetzung an einem Rahmen (10) befestigt ist.

2. Verfahren zum Bestimmen eines Gewichts nach Anspruch 1, dadurch gekennzeichnet, daß die festgesetzte Zeitspanne desweiteren eine Komplementäre Zeitspanne nach der Beendigung des Einwerfens des darauffolgenden zu wiegenden Objekts in den Wiegetrichter (7) umfaßt.

3. Verfahren zum Bestimmen eines Gewichts nach Anspruch 1 oder 2, dadurch gekennzeichnet, daß die festgesetzte Zeitspanne von einem Zeitmesser bestimmt wird.

4. Verfahren zum Bestimmen eines Gewichts nach einem der Asprüche 1, 2 oder 3, dadurch gekennzeichnet, daß eine Vielzahl von Gewichtsdetektoren (19) gemäß der festgesetzten Zeitspanne gleichzeitig festgesetzt werden.

5. Gewichtsdetektoraufbau, mit einem Gewichtsdetektor, der einen mit einem Meßinstrument verbundenen Spannungssensor (8) aufweist und dessen eines Ende an einem Rahmen (10) einer Gewichtsbestimmungsvorrichtung (1) angebracht ist und der am anderen Ende mit einem Wiegetrichter (7) versehen ist, dadurch gekennzeichnet, daß zwischen dem Rahmen (10) und der Seite des Spannungssensors (8), an der der Wiegetrichter (7) angebracht ist, eine Bremsvorrichtung (22) angebracht ist und daß die Bremsvorrichtung (22) von einer Steuervorrichtung mittels eines vorbestimmten Signals aktiviert wird.

6. Gewichtsdetektoraufbau nach Anspruch 5, dadurch gekennzeichnet, daß der Spannungssensor von einer Lastzelle (8) gebildet ist.

7. Gewichtsdetektoraufbau nach Anspruch 5 oder 6, dadurch gekennzeichnet, daß die Bremsvorrichtung von einer Solenoid-Bremse (22) gebildet ist.

**Revendications**

1. Procédé pour détecter un poids, dans lequel, au cours de la période où un objet à peser est projeté dans une trémie de pesée (7) d'un appareil de mesure de poids (1) et le poids de la trémie de pesée (7) est détecté au moyen d'un détecteur de poids (19) comprenant une sonde de contrainte (8), puis l'objet est évacué vers une étape subséquente (16), au moins pendant que l'objet est projeté dans la trémie de pesée (7), la vibration et la vibration d'atténuation de la sonde de contrainte (8) sont inhibées, caractérisé en ce que ladite sonde (8) est fixée à un bâti (10) d'inhibition pendant une durée fixée à partir du moment où le début de l'évacuation dudit objet de ladite trémie de pesée est détecté, jusqu'au moment où la détection de poids démarre.

2. Procédé de détection de poids selon la revendication 1, dans lequel ladite durée fixée comprend en outre une durée fixée complémentaire après l'achèvement de la projection de l'objet à peser subséquemment dans ladite trémie de pesée (7).

3. Procédé de détection de poids selon l'une des revendications 1 et 2, dans lequel ladite durée fixée est déterminée au moyen d'un chronomètre.

4. Procédé de détection de poids selon l'une quelconque des revendications 1, 2 et 3, dans lequel une pluralité de détecteurs de poids (19) sont inhibés simultanément selon ladite durée fixée.

5. Structure de détecteur de poids dans laquelle un détecteur de poids (19) comprend une sonde de contrainte (8) reliée à un instrument de mesure et a l'une de ses extrémités fixée à un bâti (10) d'un appareil de mesure de poids (1) et comporte une trémie de pesée (7) à l'autre extrémité, caractérisée en ce qu'un dispositif de freinage (22) est installé entre ledit bâti (10) et le côté de ladite sonde de contrainte (8) duquel est installé ladite trémie de pesée (7), et en ce que ledit dispositif de freinage (22) est actionné par un signal prédéterminé par l'intermédiaire d'un organe de commande.

6. Structure de détection de poids selon la revendication 5, dans laquelle ladite sonde de contrainte est constituée par une cellule de détection de charge (8).

7. Structure de détection de poids selon l'une des revendications 5 et 6, dans laquelle ledit dispositif de freinage est constitué par un frein électromagnétique (22).

# FIG.1

# FIG.2

# FIG.3

# FIG.4

FIG.5

# FIG.6

# FIG.7

# FIG.8

# FIG.9

# FIG.10

# FIG.11

5